# EUROPEAN PATENT APPLICATION

(11) **EP 2 770 473 A1**
(43) Date of publication of application: **27.08.2014**
(21) Application number: 14156480.7
(22) Date of filing: 25.02.2014
(51) Int. Cl.: G06Q 40/00

(54) **Systems and methods for detecting market irregularities**

(30) Priority: 26.02.2013 US 201313777839
(71) Applicant: Noblis, Inc, Falls Church, VA 22042-7508 (US)
(72) Inventor: Thomas, Sterling, Falls Church, VA Virginia 22042-7508 (US)
(74) Representative: Hyden, Martin Douglas

(57) **Abstract**

A system and method is provided for detecting market irregularities. Consistent with disclosed embodiments, a processing entity may receive securities prices over a first predetermined time period, the securities prices representing prices of at least a subset of securities within a particular market. The processing entity may compare securities price changes for a first security in the subset with securities price changes for every other security in the subset, and may determine a correlation between the first security and at least one other security in the subset based on the comparison of securities prices. Additionally, the processing entity may create a first network by associating the first security with each security in the subset determined to be correlated with the first security, and may compare the first network with one or more previously created networks to determine one or more market irregularities for the first security.

## Description

### TECHNICAL FIELD

The present disclosure relates generally to computer-implemented technologies, and in particular to methods and systems for detecting market irregularities.

### BACKGROUND

It may be beneficial for institutions to monitor market behavior of different trading markets, such as equity markets like the New York Stock Exchange (NYSE) and the NASDAQ. For example, it may be beneficial to detect anomalies within a market for a variety of purposes, including personal or institutional trading strategy, institutional monitoring (such as monitoring by the SEC), etc.

Often, certain securities (e.g., stocks, bonds, options, etc.) within a market share common price trends, such that these securities generally experience similar increases and decreases in pricing. For instance, automobile manufacturers, on average, may experience an increase in stock price during periods of economic growth and a decrease during periods of economic contraction. However, other external factors may cause a significant deviation from the market price trend. For example, a company may be associated with a bad press release causing its stock to drop significantly from the market price trend. Another company may run a successful advertising campaign and produce a significant increase in its stock price.

### SUMMARY

Consistent with disclosed embodiments, systems and methods are provided for detecting market irregularities. For example, disclosed embodiments may allow a user to analyze securities prices and identify correlations between the securities prices to build a network based on these correlations. The systems and methods may analyze securities prices over a predetermined time period (e.g. a trading day), wherein each security price within the predetermined time period is compared to every other security price. If the system detects a correlation between two securities (e.g. their prices changed in a similar manner over the trading day), the system may associate the two securities together and represent the association with an edge in the network. This network may be compared with one or more previously created networks to determine a market irregularity for a particular security (e.g. the stock prices for a first stock behaved differently from similarly situated stock).

In certain embodiments, the system may break the predetermined time period into a plurality of time segments and generate networks for each time segment. This may detect more correlations between securities prices than detected over just the predetermined time period. The networks corresponding to the plurality of time segments may be merged together into a final network. Additionally, the systems and methods may verify the accuracy of the network by removing associations and determining if a correlation value of the network increases or decreases.

Although disclosed embodiments are discussed primarily in the context of detecting market irregularities for securities markets, other applications are contemplated. For example, disclosed embodiments may allow for detection of irregularities with regard to other applications, such as, for example, detection of abnormal cellular behavior in biological systems.

It is to be understood that both the foregoing general description and the following detailed description are exemplary and explanatory only and are not restrictive of the disclosed embodiments, as claimed.

The accompanying drawings, which are incorporated in and constitute a part of this specification, illustrate disclosed embodiments and, together with the description, serve to explain the disclosed embodiments.

### BRIEF DESCRIPTION OF THE DRAWINGS

Figure 1 illustrates an exemplary system for detecting a market irregularity consistent with disclosed embodiments.
Figure 2 illustrates another exemplary system for detecting a market irregularity consistent with disclosed embodiments.
Figure 3 depicts a flowchart of an exemplary method for detecting a market irregularity consistent with disclosed embodiments.
Figure 4 depicts a flowchart of an exemplary method for receiving securities prices consistent with disclosed embodiments.
Figure 5 depicts a flowchart of an exemplary method for comparing securities prices consistent with disclosed embodiments.
Figure 6 depicts a flowchart of an exemplary method for creating a network consistent with disclosed embodiments.
Figure 7 depicts a flowchart of an exemplary method for refining a network consistent with disclosed embodiments.
Figure 8 depicts a flowchart of an exemplary method for merging multiple networks and creating a final network consistent with disclosed embodiments.
Figure 9 depicts a flowchart of an exemplary method for determining market irregularities consistent with disclosed embodiments.
Figure 10 depicts exemplary networks, consistent with disclosed embodiments.

### DETAILED DESCRIPTION

Reference will now be made in detail to the disclosed embodiments, examples of which are illustrated in the accompanying drawings. Wherever convenient, the same reference numbers will be used throughout the drawings to refer to the same or like parts.

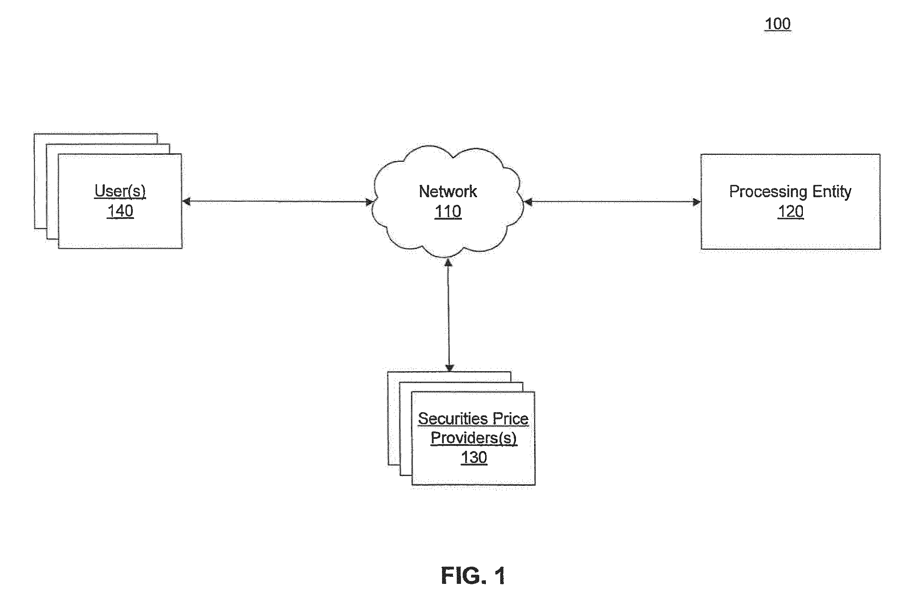

Fig. 1 is a diagram illustrating an exemplary system 100 for detecting market irregularities. System 100 may include a network 110, processing entity 120, securities price providers(s) 130, and users 140. The components and arrangement of the components described in Fig. 1 may vary. Furthermore, system 100 may additionally include any other entity or source of information associated with market irregularities.

Network 110 may be any type of network configured to provide communications between components of Fig. 1. For example, network 100 may be any type of network (including infrastructure) that provides communications, exchanges information, and/or facilitates the exchange of information, such as the Internet, a Local Area Network, or other suitable connection(s) that enables system 100 to send and receive information between the components of system 100.

Processing entity 120 may be a system that processes and detects market irregularities. In some embodiments, processing entity 120 may include one or more computing systems that are located at a central location or may include computing devices that are distributed (locally or remotely).

Securities price provider(s) 130 may include one or more entities associated with one or more securities markets. For example, securities price providers 130 may monitor securities prices for one or more securities within a market and provide securities price information to processing entity 120. For the purposes of this application, a security refers to a tradable asset of any kind. For example, securities may include equity securities such as common stock, debt securities such as banknotes, bonds, and debentures, and/or derivative contracts such as forwards, futures, options, and swaps. Securities price providers 130 may include one or more computing systems to monitor the prices of one or more securities (i.e., securities prices). For example, securities price providers 130 may include a data repository (not shown) that maintains securities price information for each security within one or more markets. In some embodiments, securities price providers 130 may be separate entities and distinct from processing entity 120. However, it is contemplated that securities price providers 130 may include an integrated component of processing entity 120.

User(s) 140 may include one or more customers associated with processing entity 120. Users 140 may request securities price information, including securities price trends depicting market irregularities, from processing entity 120. Additionally, users 140 may communicate with other components of system 100, for example processing entity 120, through network 110 using any suitable computer device, such as a laptop or desktop computer, mobile phone (e.g., smartphone), tablet, and the like. In another embodiment, users 140 may interact directly with processing entity 120 via one or more user interface devices, such as a mouse, keyboard, display, touchscreen, etc., located at processing entity 120 (not shown).

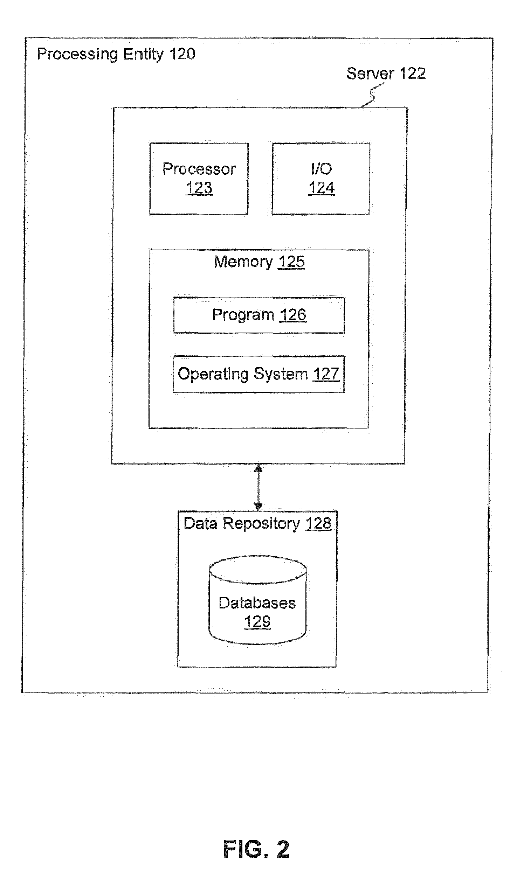

Fig. 2 shows an exemplary system that may be associated with processing entity 120. In one embodiment, the system includes a server 120 having one or more processors 123, one or more memories 125, and one or more input/output (I/O) devices 124. Alternatively, server 120 may take the form of a general purpose computer, a mainframe computer, or any combination of these components. Server 120 may be standalone, or it may be part of a subsystem, which may be part of a larger system.

Processor 123 may include one or more known processing devices, such as a microprocessor from the Pentium™ or Xeon™ family manufactured by Intel™, the Turion™ family manufactured by AMD™, or any other type of processor.

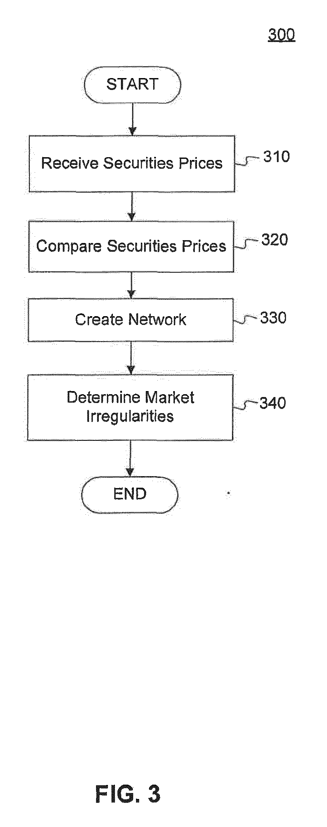

Memory 125 may include one or more storage devices configured to store instructions used by processor 123 to perform functions related to disclosed embodiments. For example, memory 125 may be configured with program 126 that, when executed by processor 123, enable processor 123 to perform one or more of the functions described below with regard to Figs. 3-9. Therefore, the disclosed embodiments are not limited to separate programs or computers configured to perform dedicated tasks. For example, memory 125 may include a single program 126 for performing the functions of the server 122, or program 126 could comprise multiple programs. Additionally, processor 123 may execute one or more programs located remotely from server 122. For example, processing entity 120 may access one or more remote programs that, when executed, perform functions related to disclosed embodiments.

Memory 125 may also be configured with operating system 127 that performs several functions well known in the art when executed by server 122. By way of example, the operating system may be Microsoft Windows™, Unix™, Linux™, Solaris™, or some other operating system. The choice of operating system, and even the use of an operating system, is not critical to any disclosed embodiment.

I/O devices 124 may be one or more device that are configured to allow data to be received and/or transmitted by server 122. I/O devices 122 may include one or more digital and/or analog communication devices that allow server 122 to communicate with other machines and devices.

Server 122 may also be communicatively connected to one or more data repositories 228 as shown in Fig. 2. Server 220 may be communicatively connected to one or more data repositories 128 through network 110. Data repository 128 may include one or more files or databases 129 that store information and are accessed and/or managed through server 122. By way of example, databases 129 may be Oracle™ databases, Sybase™ databases, or other relational databases or non-relational databases, such as Hadoop sequence files, HBase, or Cassandra. The databases or other files may include, for example, data and information related to the securities prices. Systems and methods of disclosed embodiments, however, are not limited to separate databases. In one aspect, processing entity 120 may include data repository 128. Alternatively, data repository 128 may be located remotely from processing entity 120.

Fig. 3 is a flow diagram 300 of an exemplary method for detecting market irregularities, consistent with disclosed embodiments. In step 310, server 122 may receive securities prices, for example from securities price providers 130 through internet 110. The securities prices may include a time series of trading prices for one or more securities of a particular securities market over a predetermined time period. Server 122, in step 320, may compare these received securities prices and determine correlations between the securities. For example, server 122 may determine that a correlation exists between two securities if their prices increased or decreased similarly over the predetermined time period. Based on the detected correlations, server 122 may create a network by creating an association or relationship between the correlated securities within the network (step 330). For example, server 122 may create associations or relationships between correlated securities represented by a link or connection in the network. A first security may be associated with one or more securities within the network. Additionally or alternatively, server 122 may create multiple networks over the predetermined time period and merge these multiple networks in a final network. Server 122 may also refine the networks and verify the accuracy of each association. Furthermore, in step 340, server 122 may determine market irregularities by comparing the final network with one or more previously created networks. Server 122 may detect one or more differences in securities associations between the final network and the one or more previously created networks and determine that a market irregularity exists.

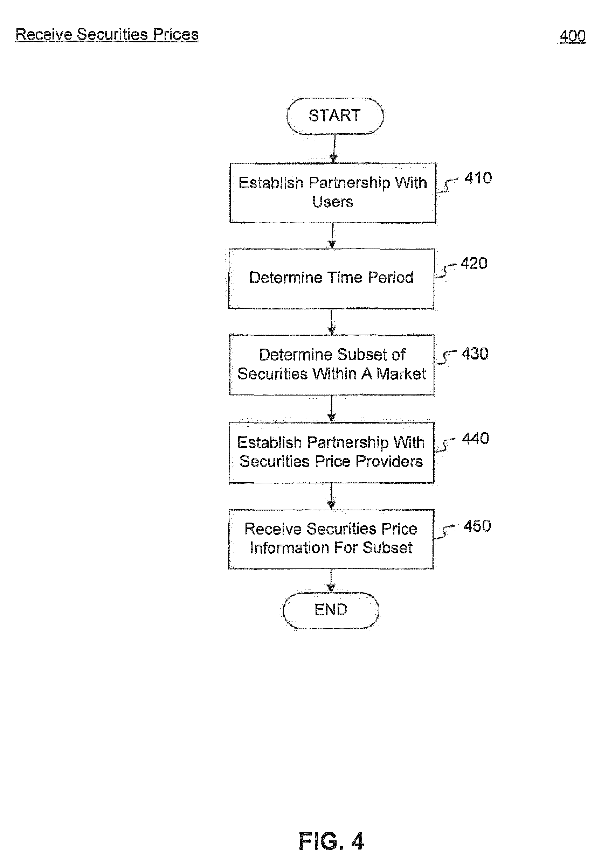

Fig. 4 shows an exemplary process for receiving securities prices consistent with disclosed embodiments. Processing entity 120 may establish a partnership with users 140, as shown by step 410. For example, the two entities may agree that processing entity 120 processes securities information to detect the presence of market irregularities in a specified market and generates results for users 140. Server 122 may receive notification of this partnership. Users 140, processing entity 120, and/or another entity may determine a first predetermined time period for the securities price information (step 420). Server 122 may only receive and process securities prices over the first predetermined time period. In one embodiment, the first predetermined time may be a trading day so that server 122 may only receive securities prices accumulated over the trading day. In another embodiment, the first predetermined time period may be multiple days, for example, two consecutive days, or any other number of consecutive or non-consecutive days, so that server 122 may receive securities prices accumulated over the multiple days included in the first predetermined time period.

As shown in step 430, users 140, processing entity 120, and/or another entity may determine the securities for processing. For example, server 122 may determine a subset of securities within a particular market and only process those securities. It is contemplated that the subset may be smaller than the market or the subset may include the entire market. For example, the subset may include the top 100 stocks on the NYSE or all retail participants on the Tokyo Stock Exchange. In other embodiments, the subset may include all stocks in the NASDAQ.

Processing entity 120, as shown in Fig. 4, may establish a partnership with securities price providers 130 (step 440) and server 122 may receive the securities price information from securities price providers 130 (step 450). For example, processing entity 120 and securities price providers 130 may agree that securities price providers 130 may only deliver securities price information within the first predetermined time period and for only the determined subset of securities. Server 122 may receive the securities price information and process the information to detect market irregularities.

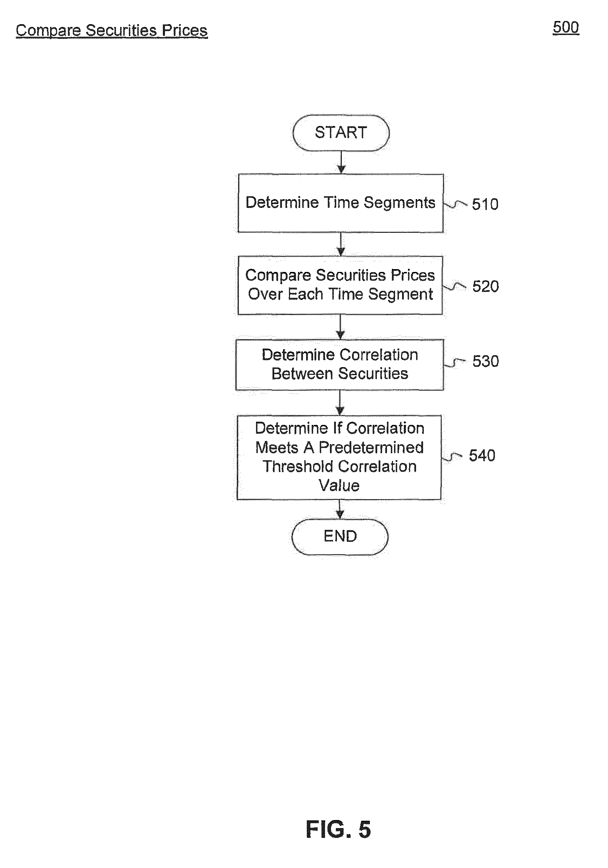

As shown in Fig. 5, server 122 may process the information by comparing the price of each security in the subset with every other security in the subset. This comparison may be performed over a plurality of time segments in order to detect a greater number of security correlations. Specifically, server 122 may determine a plurality of time segments from among the first predetermined time period. Therefore, server 122 may divide the first predetermined time period into the plurality of time segments so that each time segment represents at least a portion of the first predetermined time period (step 510). In one embodiment, wherein the first predetermined time period equals a trading day, server 122 may divide the first predetermined time period into one segment (e.g. the entire trading day), two segments (e.g. a first half of the trading day and a second half of the trading day), four segments (e.g. dividing the trading day into quarters), and eight segments (e.g. dividing the day into eighths).

Server 122 may compare the securities prices over each time segment to detect market irregularities, as shown in step 520. It is contemplated that the comparison over each time segments may identify unique correlations not detectable in the other time segments. Alternatively, server 122 may only compare the securities prices over the first predetermined time period. Server 122 may use a variety of techniques to compare the securities prices, including, for example, a graphical cluster analysis incorporating the use of scatter plots to compare one security price to another. Server 122 may detect linear and non-linear correlations between the securities.

In one embodiment, server 122 may detect a securities price trend based on predetermined increment values to compare the securities prices. For example, server 122 may divide each time segment into a predetermined increment value and determine a securities price for each security at each increment. Alternatively, server 122 may receive this information from users 140. In one example, server 122 may determine the increment value to be 2 minutes and may detect the price of each security every 2 minutes within each time segment. Therefore, if the first time segment equals 4.5 hours (i.e. a trading day) and the predetermined increment value equals 2 minutes, server 122 may detect 135 securities price values for a first security over the first time segment. Server 122 may determine a trend for the first security based on the securities price values. For example, server 122 may detect that the price of the first security remained relatively constant for the first portion of the day at value X, increased in value to Y amount at 10:02 a.m., and then remained relatively constant for the remainder of the day. Server 122 may compare this trend for the first security with the trend of every security in the subset. Additionally, server 122 may perform this comparison for every other time segment.

As shown in step 530, based on the comparison of securities price changes, including the comparison of securities price trends, server 122 may determine that a correlation exists between two or more securities. For example, server 122 may determine that the first security trend behaved similarly, including linear and nonlinear patterns, to a second security trend (e.g. they both increased proportionally during the trading day, they both increased from approximately value X to approximately value Y, the second security decreased from approximately value Y to approximately value X, etc.). Server 122 may repeat this step by comparing each security in the subset with every other security in the subset.

In some embodiments, as shown by step 540, server 122 may only determine a correlation exists if the correlation meets a predetermined threshold correlation value. For example, server 122 may assign each association a correlation coefficient based on the Spearman's rank correlation, although one or more other linear or nonlinear correlation calculations may also be used, and compare each correlation coefficient to the predetermined threshold correlation value. In these embodiments, server 122 may assign a correlation coefficient a value between -1 and +1, with positive correlation values corresponding to a positive correlation (e.g., the correlated securities prices change in a similar manner) and negative correlation values corresponding to an inverse correlation (e.g., the correlated securities prices exhibit an inverse relationship to one another). Server 122 may assign the correlation values such that the more similar the association between two securities, the closer the absolute value of the correlation value is to 1, while the less similar the association, the closer the absolute value of the correlation value is to 0. For example, server 122 may assign a correlation coefficient of 0.8 to an association when a first security increased in price by 20% and a second security increased in price by 30% over the same time segment. Likewise, server 122 may assign a correlation coefficient of -0.8 to an association when a first security increased in price by 20% and a second security decreased in price by 30% over the same time segment. Therefore, server 122 may compare the correlation coefficient with the predetermined threshold correlation value, for example 0.75 and only determine the two securities to be correlated if the correlation coefficient meets the predetermined threshold correlation value. In one example, the correlation coefficient of 0.8 is higher than the predetermined threshold correlation value of 0.75 so that server 122 may determine the two securities to be correlated. In certain embodiments, server 122 may determine that two securities are correlated only if they have positive correlation coefficients and may determine that any securities with negative correlation coefficients are not correlated. In other embodiments, server 122 may compare the absolute value of the correlation coefficient to a threshold and may thus include within the network associations between securities having negative correlation coefficients.

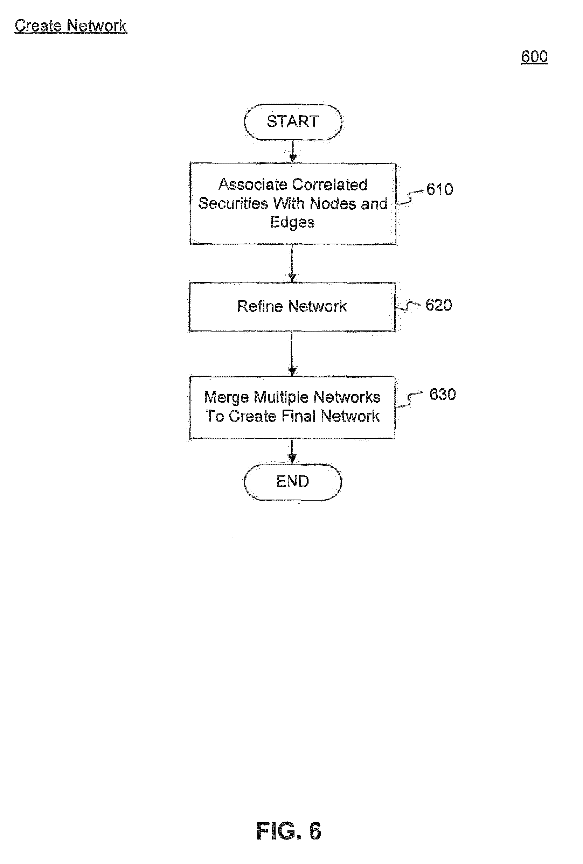

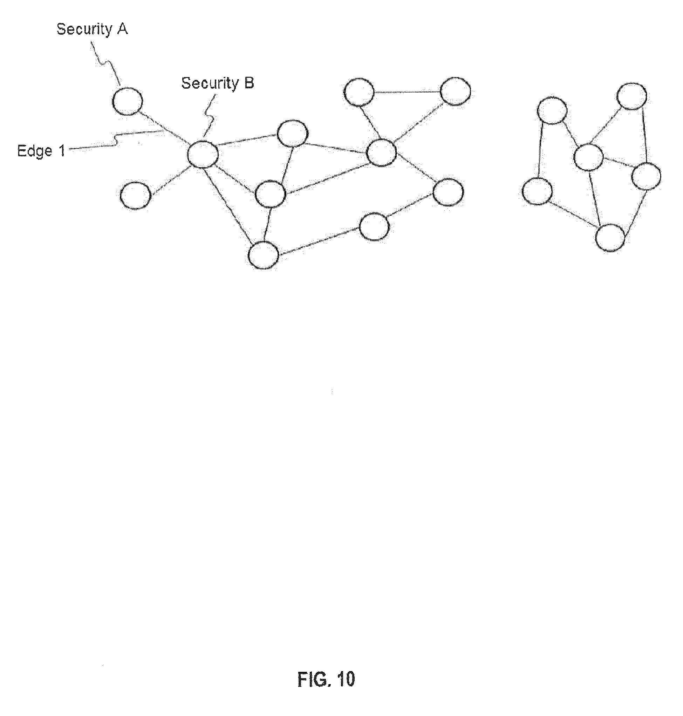

As shown in Fig. 6, server 122 may create a network based on the determination of the correlated securities. Server 122 may associate correlated securities in a first network by creating a relationship between the securities within memory 125 and generating data representing the associations as a system of nodes and edges (step 610). For example, Fig. 10 shows an exemplary display of a network that may be generated by processor 123 to enable users 140 to visualize the associations among different securities within a network. As shown in Fig. 10, the display may include a plurality of securities (e.g. security A, security B, etc.) connected through edges. Server 122 may determine that a correlation exists between security A and security B and thus associate the two securities together with edge 1. Additionally, as shown in Fig. 10, server 122 may determine that security B shares a correlation with 4 other securities and create an association with each of those securities. Server 122 may create a network associated with each time segment and therefore create multiple networks for each subset of securities.

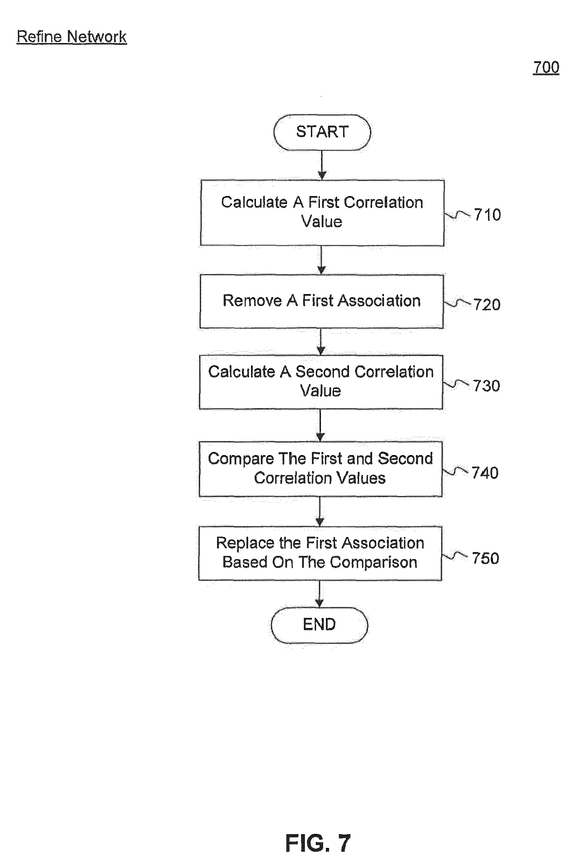

Server 122 may refine each network and verify each network is accurate (step 620). Fig. 7 shows an exemplary refinement process 700 consistent with disclosed embodiments. Server 122 may calculate a first correlation value of a first network (step 710). This correlation value may represent the similarity of securities prices within a network such that a network with more similar securities price changes will have a higher first correlation value than a network with less similar securities price changes. Server 122 may then remove a first association between two securities (step 720). For example, server 122 may remove edge 1 between security A and security B as shown in Fig. 10. Server 122 may then calculate a second correlation value (step 730). This correlation value may also represent the similarity of securities prices within the network. For example, in one embodiment, server 122 may calculate the first and second correlation values based on the Spearman's rank correlation. Server 122 may compare the first correlation value with the second correlation value (step 740). A higher first correlation value than the second correlation value may be an indication that the association between security A and security B added to the similarity of the network. Therefore, edge 1 may be an accurate association and server 122 may replace this association in the network (step 750). Alternatively, a higher second correlation value than the first correlation value may be an indication that the association between security A and security B does not add to the similarity of the network. Therefore, edge 1 may be an inaccurate association and server 122 may remove this association from the network. Server 122 may repeat this process for every other network associated with each time segment.

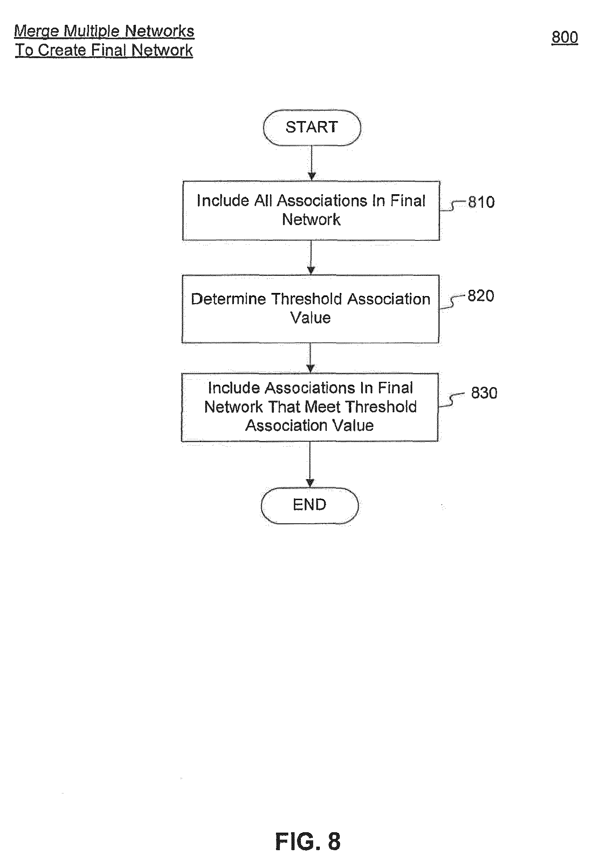

As shown in step 630 of Fig. 6, server 122 may merge the multiple networks associated with each time segment into a final network. Fig. 8 shows an exemplary merging process 800 consistent with disclosed embodiments. Server 122 may, in a first embodiment, include all associations between two securities in the final network if the association between the two securities is included in at least one of the multiple networks (step 810). Therefore, for example, if a first network includes the association but a second network does not, server 122 may still include the association in the final network.

In a second embodiment, server 122 may only include an association between two securities in the final network if the association between the two securities is included in a predetermined number of the multiple networks. Server 122 may determine a threshold association value representing the predetermined number of multiple networks, as shown in step 820. Server 122 may, in one example, determine a threshold association value of 10. Therefore, server 122 may only include the association between the two securities in the final network if the association is included in at least 10 networks of the multiple networks (step 830).

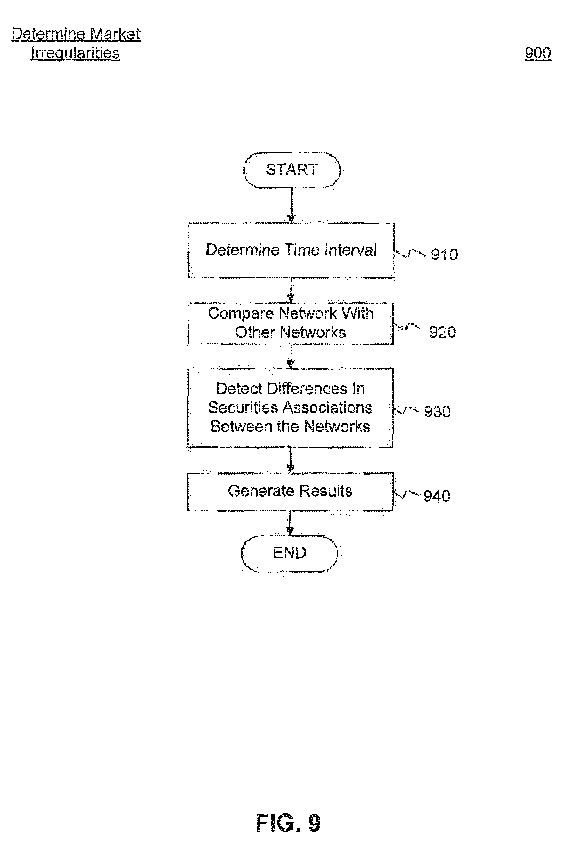

Server 122 may determine irregularities within a securities market by comparing the final network with one or more previously created networks. Fig. 9 shows an exemplary process 900 for determining market irregularities consistent with disclosed embodiments. As shown in step 910, server 122 may determine a time interval, wherein the time interval includes at least every multiple time segment, including the first predetermined time period. In one example, the time interval may include a year and the first predetermined time period may include a trading day, such that the time interval is of longer duration than the first predetermined time period and overlaps the first predetermined time period.

As shown in step 920, server 122 may compare the final network with one or more previously created networks over the time interval. In one embodiment, server 122 may have previously created 10,000 networks over the time interval. Server 122 may then compare the final network with each of these 10,000 networks, for example, by comparing the associations within each network. A difference in one or more associations between the final network and the one or more previously created networks may be an indication that a market irregularity exists. For example, a first security may behave differently from the other securities within its subset. Additionally or alternatively, the first security may, for example, behave more similar to a different subset of securities than its own subset. Server 122 may detect these differences in securities associations between the networks (step 930) and generate results to users 140 (step 940). The results may include an indication that a market irregularity exists based on the differences in one or more associations between networks. Users 140 may use the results to help explain market trends and to form a diverse security portfolio.

Other embodiments will be apparent to those skilled in the art from consideration of the specification and practice of the disclosed embodiments disclosed herein. It is intended that the specification and examples be considered as exemplary only, with a true scope and spirit of the disclosed embodiments being indicated by the following claims.

## Claims

1. A computer system for detecting market irregularities within a securities market, comprising:
one or more memories storing instructions; and
one or more processors configured to execute the instructions to perform:
receiving securities prices over a first predetermined time period, the securities prices representing prices of at least a subset of securities within a particular market;
comparing securities price changes for a first security in the subset with securities price changes for every other security in the subset;
determining a correlation between the first security and at least one other security in the subset based on the comparison of securities price changes;
creating a first network by associating the first security with each security in the subset determined to be correlated with the first security; and
comparing the first network with one or more previously created networks to determine one or market irregularities for the first security.

2. The system of claim 1, wherein the one or more processors are further configured to execute the instructions to perform:
comparing securities prices of each security in the subset with every other security in the subset;
determining if a correlation exists between each security in the subset with every other security in the subset; and
creating the first network by associating any two securities in the subset determined to have a correlation between the securities.

3. The system of claim 1, wherein the one or more processors are further configured to execute the instructions to perform:
generating data to represent the first network as a system of nodes and edges such that an edge represents an association between two securities and a node represents a security.

4. The system of claim 1, wherein the one or more processors are further configured to execute the instructions to perform:
determining a plurality of time segments from among the first predetermined time period, wherein each time segment represents at least a portion of the first predetermined time period;
creating multiple networks, wherein each network corresponds to one time segment; and
merging the multiple networks into a final network.

5. The system of claim 4, wherein merging the multiple networks into a final network includes including an association between two securities in the final network if the association between the two securities is included in a predetermined number of the multiple networks.

6. The system of claim 4, wherein merging the multiple networks into a final network includes including an association between two securities in the final network if the association between the two securities is included in at least one of the multiple networks.

7. The system of claim 1, wherein the one or more processors are further configured to execute the instructions to perform:
calculating a first correlation value of the first network;
removing a first association between the first security and a second security in the first network;
calculating a second correlation value of the first network;
replacing the association between the first security and the second security in the first network if the first correlation value is greater than the second correlation value.

8. The system of claim 1, wherein comparing the first network with one or more previously created networks to determine one or more market irregularities includes:
determining a time interval, the time interval including at least the first predetermined time period;
comparing the first network with the one or more previously created networks over the time interval; and
detecting differences in one or more associations between the first network and the one or more previously created networks.

9. The system of claim 8, wherein the one or more processors are further configured to execute the instructions to perform:
generating an indication that a market irregularity exists in response to detecting at least one difference in the one or more associations between the first network and the one or more previously created networks.

10. The system of claim 1, wherein the one or more processors are further configured to execute the instructions to perform:
determining a predetermined threshold correlation value; and
associating the first security with each security determined to be correlated with the first security in the first network if the correlations meet the predetermined threshold correlation value.

11. A computer-implemented method for detecting market irregularities within a securities market, comprising:
receiving, by one or more processors, securities prices over a first predetermined time period, the securities prices representing prices of at least a subset of securities within a particular market;
comparing, by the one or more processors, securities prices changes for a first security in the subset with securities price changes for every other security in the subset;
determining, by the one or more processors, a correlation between the first security and at least one other security in the subset based on the comparison of securities price changes;
creating, by the one or more processors, a first network by associating the first security with each security in the subset determined to be correlated with the first security; and
comparing the first network with one or more previously created networks to determine one or market irregularities for the first security.

12. The method of claim 11, further including:
comparing, by the one or more processors, securities prices of each security in the subset with every other security in the subset;
determining, by the one or more processors, if a correlation exists between each security in the subset with every other security in the subset; and
creating, by the one or more processors, the first network by associating any two securities in the subset determined to have a correlation between the securities.

13. The method of claim 11, further including:
generating, by the one or more processors, data to represent the first network as a system of nodes and edges such that an edge represents an association between two securities and a node represents a security.

14. The method of claim 11, further including:
determining, by the one or more processors, a plurality of time segments from among the first predetermined time period, wherein each time segment represents at least a portion of the first predetermined time period;
creating, by the one or more processors, multiple networks, wherein each network corresponds to one time segment; and
merging the multiple networks into a final network.

15. The method of claim 14, wherein merging the multiple networks into a final network includes including an association between two securities in the final network if the association between the two securities is included in a predetermined number of the multiple networks.

16. The method of claim 14, wherein merging the multiple networks into a final network includes including an association between two securities in the final network if the association between the two securities is included in at least one of the multiple networks.

17. The method of claim 11, further including:
calculating, by the one or more processors, a first correlation value of the first network;
removing, by the one or more processors, a first association between the first security and a second security in the first network;
calculating, by the one or more processors, a second correlation value of the first network;
replacing, by the one or more processors, the association between the first security and the second security in the first network if the first correlation value is greater than the second correlation value.

18. The method of claim 11, wherein comparing the first network with one or more networks to determine one or more market irregularities includes:
determining, by the one or more processors, a time interval including at least the first predetermined time period;
comparing, by the one or more processors, the first network with the one or more previously created networks over the time interval; and
detecting, by the one or more processors, differences in one or more associations between the first network and the one or more previously created networks.

19. The method of claim 18, further including:
generating, by the one or more processors, an indication that a market irregularity exists in response to detecting at least one difference in the one or more associations between the first network and the one or more previously created networks.

20. The method of claim 11, further including:
determining, by the one or more processors, a predetermined threshold correlation value; and
associating, by the one or more processors, the first security with each security determined to be correlated with the first security in the first network if the correlations meet the predetermined threshold correlation value.
